# DEMANDE DE BREVET EUROPEEN

(11) **EP 4 652 845 A1**
(43) Date de publication de la demande: **26.11.2025**
(21) Numéro de dépôt: 24305814.6
(22) Date de dépôt: 24.05.2024
(51) Int. Cl.: A21C 3/04, A21C 5/00, A21C 9/04, A21C 11/10, A21C 11/16

(54) **DISPOSITIF DE FORMAGE DE PATES ALIMENTAIRES, INSTALLATION ET PROCEDE DE FABRICATION CORRESPONDANTS**

(71) Demandeur: Lustucru Frais, 69008 Lyon (FR)
(72) Inventeur: DREUX, Vincent, 69110 SAINTE FOY LES LYON (FR)
(74) Mandataire: Cabinet Didier Martin

(57) **Abrégé**

Dispositif de formage de pâtes alimentaires, installation et procédé de fabrication correspondants.
Le dispositif de formage de pâtes alimentaires comprennent des buses d'extrusion, des couteaux pour découper lesdits extrudats afin de former des pâtons, et un dispositif de farinage, caractérisé en ce que les couteaux sont conçus pour exercer un effort du haut vers le bas sur chacun desdits pâtons afin de leur impartir une trajectoire d'éjection descendante, ledit dispositif de farinage étant disposé au-dessus de la sortie des buses pour fariner lesdits extrudats dès leur sortie des buses.

## Description

La présente invention se rapporte au domaine général des produits alimentaires, et plus précisément au domaine technique des pâtes alimentaires.

La présente invention concerne en particulier un dispositif de formage de pâtes alimentaires destinées à être réchauffées et/ou cuites avant d'être consommées, ledit dispositif de formage comprenant :
- des buses d'extrusion par lesquelles est destinée à passer une composition pâteuse, pour former, en sortie desdites buses, des extrudats à partir desquels les pâtes alimentaires sont destinées à être formées,
- un rouleau de découpe pour découper lesdits extrudats afin de former des pâtons, ledit rouleau de découpe étant monté mobile à rotation relativement auxdites buses d'extrusion selon un premier axe de rotation,
- et un dispositif de farinage.

La présente invention concerne également une installation de fabrication de pâtes alimentaires destinées à être réchauffées et/ou cuites avant d'être consommées, ladite installation incluant au moins :
- un poste de fabrication d'une composition pâteuse à partir de laquelle lesdites pâtes alimentaires sont destinées à être fabriquées,
- un dispositif de formage conforme à la description qui précède.

Enfin la présente invention concerne un procédé de fabrication de pâtes alimentaires destinées à être réchauffées et/ou cuites avant d'être consommées, ledit procédé comprenant :
- une opération d'extrusion au cours de laquelle une composition pâteuse passe par des buses d'extrusion pour former, en sortie desdites buses, des extrudats à partir desquels les pâtes alimentaires sont destinées à être formées,
- une opération de découpe desdits extrudats, au moyen d'un rouleau de découpe qui tourne relativement auxdites buses d'extrusion selon un premier axe de rotation, afin de former des pâtons,
- et une opération de farinage.

Les pâtes alimentaires sont des aliments particulièrement prisés des consommateurs, en particulier lorsqu'elles se présentent sous la forme de palets, boudins, ou encore boulettes, comme par exemple les tortellinis, les ravioles...

Ces produits alimentaires peuvent être fabriqués de manière artisanale, mais aussi et surtout de façon industrielle, afin en particulier de répondre à la demande importante des consommateurs. Il est connu, pour fabriquer industriellement de telles pâtes alimentaires sous forme de palets, boudins ou boulettes, de recourir à une opération d'extrusion d'une composition pâteuse à travers des buses d'extrusion, disposées par exemple en ligne, afin de former de façon continue des extrudats qui sont automatiquement découpés en aval des buses pour former lesdits palets, boudins ou boulettes. Plus précisément, les extrudats issus de la rangée de buses d'extrusion sont découpés au moyen d'un rouleau de découpe qui porte des rangées alternées de godets munis chacun d'une arête tranchante. Chacun desdits godets suit ainsi une trajectoire circulaire qui l'amène à venir trancher l'extrudat par-dessous, pour former un pâton qui est subséquemment embarqué dans le godet et soulevé par ce dernier jusqu'à ce qu'il soit relâché, sous l'effet de la gravité, vers une zone de striage où chaque pâton est soumis à une opération de striage consistant à lui impartir des stries en surface.

Une telle installation de formage donne globalement satisfaction, notamment car elle permet d'atteindre des cadences de fabrication intéressantes. Elle n'en présente pas moins toutefois de sérieux inconvénients.

En particulier, la mise en oeuvre de cadences de fabrication élevées nécessite de recourir à une vitesse de rotation élevée du rouleau de découpe qui porte les godets à bords tranchants. Or, le recours à des vitesses de rotation élevée peut entraîner une expulsion précoce intempestive des pâtons hors des godets qui les contiennent individuellement, sous l'effet de la force centrifuge. Chaque pâton risque ainsi de s'échapper hors du godet qui le contient initialement, puis de passer à l'arrière dudit godet pour tomber en dehors de la zone de striage, ou bien encore rouler le long de l'arbre qui porte les godets pour se retrouver dans un godet adjacent qui contient déjà un pâton. Dans ce dernier cas de figure, deux pâtons collés l'un à l'autre sont envoyés en même temps dans la zone de striage, ce qui perturbe bien entendu les opérations suivantes, notamment le striage.

En outre, la configuration de l'installation de formage connue décrite dans ce qui précède complique le farinage des pâtons, qui est indispensable à des fins de lubrification, pour éviter que les pâtons ne collent à l'outillage et/ou ne se collent les uns aux autres. En effet, dans les installations connues de l'art antérieur, la trajectoire des godets est susceptible d'interférer significativement avec celle de la farine, ce qui gêne le farinage et entraîne la rétention intempestive de farine dans les godets, entraînant de ce fait une surconsommation de farine.

Enfin, la maintenance des installations connues décrites ci-avant s'avère être relativement complexe et onéreuse, et leur exploitation peut s'avérer délicate, avec là encore des coûts potentiellement élevés pour maintenir un niveau de qualité optimal.

Les objets assignés à l'invention visent par conséquent à remédier aux différents inconvénients exposés dans ce qui précède et à proposer un nouveau dispositif de formage de pâtes alimentaires qui, tout en étant de conception extrêmement simple et robuste, permet un formage net et fiable, à haute cadence de fabrication, tout en limitant la consommation de farine.

Un autre objet de l'invention vise à proposer un nouveau dispositif de formage de pâtes alimentaires de construction particulièrement compacte et permettant un formage très précis.

Un autre objet de l'invention vise à proposer un nouveau dispositif de formage de pâtes alimentaires dont la conception autorise une découpe particulièrement nette et rapide.

Un autre objet de l'invention vise à proposer un nouveau dispositif de formage de pâtes alimentaires dont la conception facilite tout particulièrement la maintenance, la réparation et le nettoyage.

Un autre objet de l'invention vise à proposer un nouveau dispositif de formage de pâtes alimentaires dont la conception favorise un farinage optimal.

Un autre objet de l'invention vise à proposer un nouveau dispositif de formage de pâtes alimentaires qui permet une découpe et une éjection des pâtons particulièrement efficace.

Un autre objet de l'invention vise à proposer un nouveau dispositif de formage de pâtes alimentaires dont la conception est particulièrement robuste et durable.

Un autre objet de l'invention vise à proposer un nouveau dispositif de formage de pâtes alimentaires dont la conception permet de limiter drastiquement les risques d'interruption de production.

Un autre objet de l'invention vise à proposer de nouveaux installation et procédé de fabrication de pâtes alimentaires qui permettent de fabriquer des pâtes alimentaires dans des conditions industrielles optimales, de façon particulièrement rapide, précise, fiable et bon marché, avec une consommation limitée de farine et à haute cadence de fabrication.

Les objets assignés à l'invention sont atteints à l'aide d'un dispositif de formage de pâtes alimentaires destinées à être réchauffées et/ou cuites avant d'être consommées, ledit dispositif de formage comprenant :
- des buses d'extrusion par lesquelles est destinée à passer une composition pâteuse, pour former, en sortie desdites buses, des extrudats à partir desquels les pâtes alimentaires sont destinées à être formées,
- un rouleau de découpe pour découper lesdits extrudats afin de former des pâtons, ledit rouleau de découpe étant monté mobile à rotation relativement auxdites buses d'extrusion selon un premier axe de rotation,
- et un dispositif de farinage,
caractérisé en ce que ledit rouleau de découpe comprend une pluralité de couteaux individuels conçus pour exercer un effort d'entraînement du haut vers le bas sur chacun desdits pâtons lors de la découpe des extrudats par lesdits couteaux pour former lesdits pâtons, afin d'impartir à chaque pâton une trajectoire d'éjection exclusivement descendante, ledit dispositif de farinage étant disposé au-dessus de la sortie des buses pour fariner lesdits extrudats sensiblement dès leur sortie des buses, avant leur découpe par lesdits couteaux.

Les objets assignés à l'invention sont également atteints à l'aide d'une installation de fabrication de pâtes alimentaires destinées à être réchauffées et/ou cuites avant d'être consommées, ladite installation incluant au moins :
- un poste de fabrication d'une composition pâteuse à partir de laquelle lesdites pâtes alimentaires sont destinées à être fabriquées,
- un dispositif de formage selon l'invention.

Les objets assignés à l'invention sont enfin atteints à l'aide d'un procédé de fabrication de pâtes alimentaires destinées à être réchauffées et/ou cuites avant d'être consommées, ledit procédé comprenant :
- une opération d'extrusion au cours de laquelle une composition pâteuse passe par des buses d'extrusion pour former, en sortie desdites buses, des extrudats à partir desquels les pâtes alimentaires sont destinées à être formées,
- une opération de découpe desdits extrudats, au moyen d'un rouleau de découpe qui tourne relativement auxdites buses d'extrusion selon un premier axe de rotation, afin de former des pâtons,
- une opération de farinage,
caractérisé en ce que ledit rouleau de découpe comprend une pluralité de couteaux qui exercent un effort d'entraînement du haut vers le bas sur chacun desdits pâtons lors de la découpe des extrudats par lesdits couteaux pour former lesdits pâtons, impartissant ainsi à chaque pâton une trajectoire d'éjection exclusivement descendante, et en ce qu'au cours de ladite opération de farinage, lesdits extrudats sont farinés par le dessus, sensiblement dès leur sortie des buses, avant leur découpe par lesdits couteaux.

D'autres particularités et avantages de l'invention apparaîtront et ressortiront plus en détail à la lecture de la description faite ci-après, en référence aux dessins annexés, donnés uniquement à titre d'exemples illustratifs et non limitatifs, parmi lesquels :

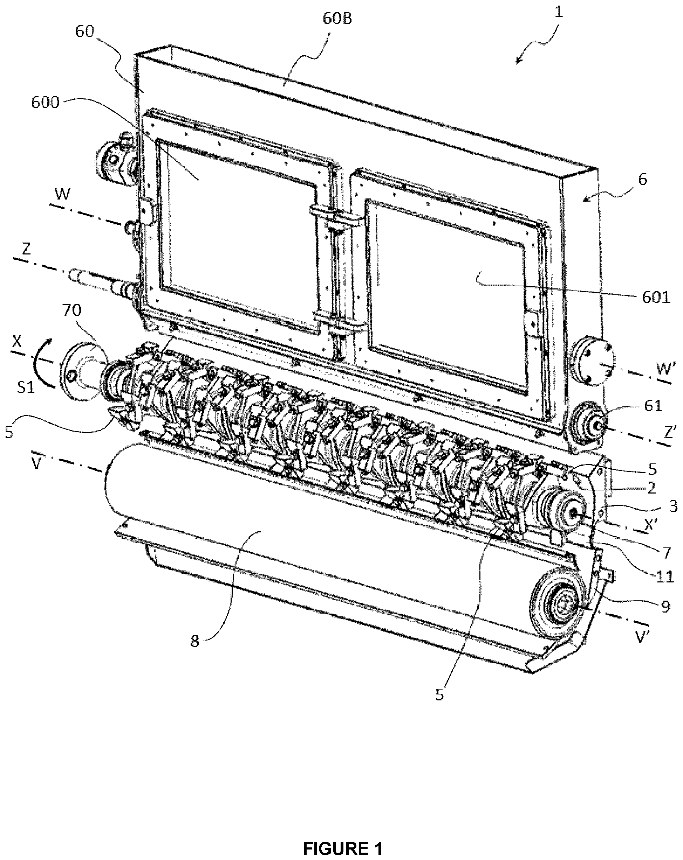

La figure 1 illustre, selon une vue schématique en perspective avant, une partie d'un dispositif de formage de pâtes alimentaires conforme à l'invention, qui inclut en particulier les buses d'extrusion, le rouleau de découpe et le dispositif de farinage susvisés, ainsi qu'un rouleau de striage.

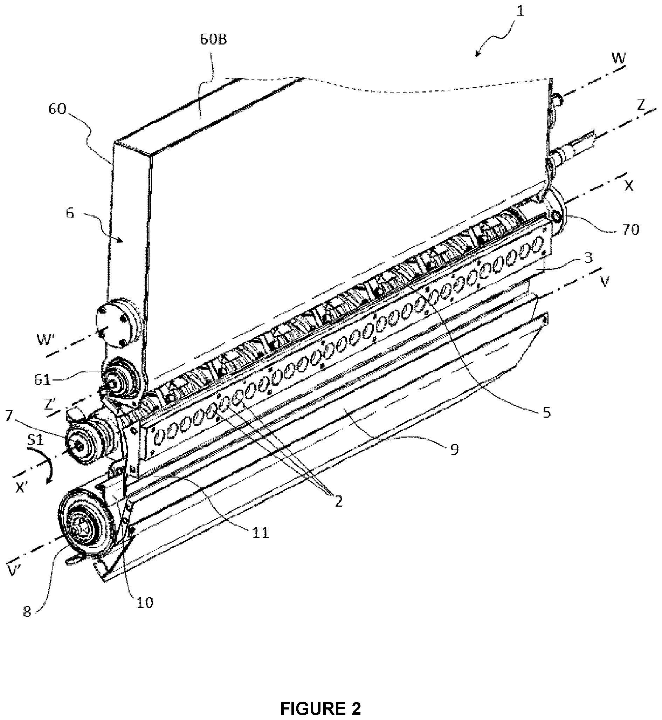

La figure 2 illustre, selon une vue schématique en perspective arrière, la partie du dispositif de formage illustrée à la figure 1.

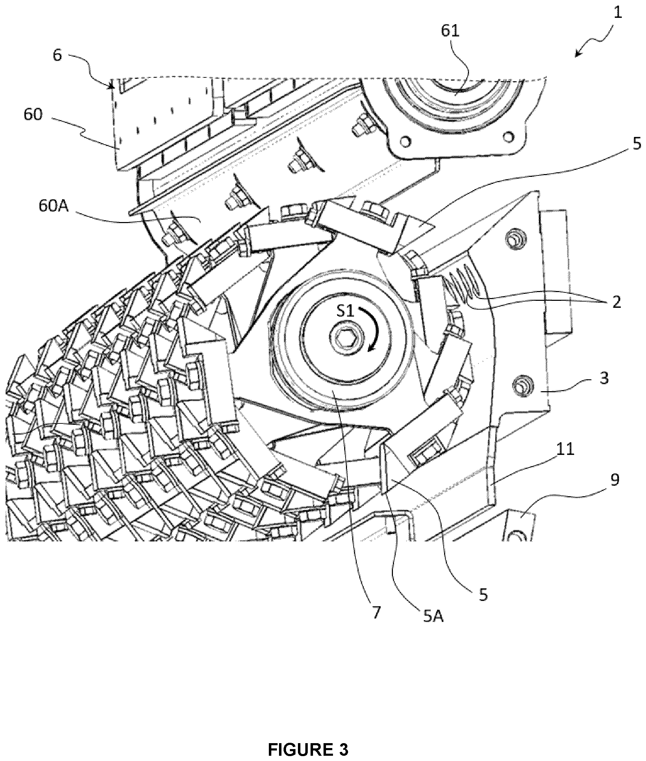

La figure 3 illustre, selon une vue schématique en perspective avant, un détail de réalisation de la partie du dispositif de formage illustrée aux figures précédentes, centré sur le rouleau de découpe.

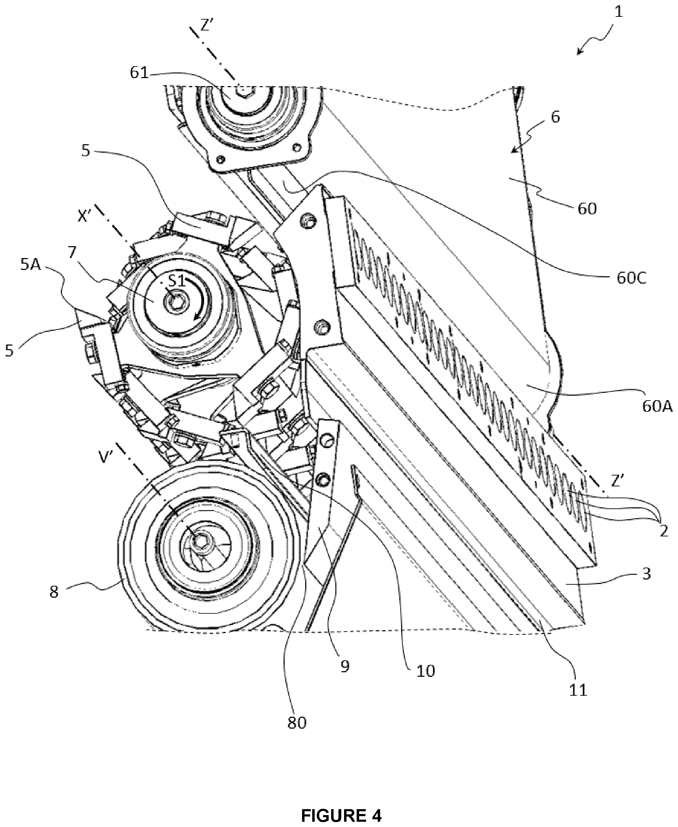

La figure 4 illustre, selon une vue schématique en perspective arrière, un détail de réalisation de la partie du dispositif de formage illustré aux figures précédentes.
La figure 5 illustre, selon une vue schématique en coupe transversale, la partie du dispositif de formage illustré aux figures 1 et 2.
La figure 6 illustre, selon une vue schématique en coupe transversale, un détail de la figure 5.
La figure 7 est une vue agrandie du détail A de la figure 6.

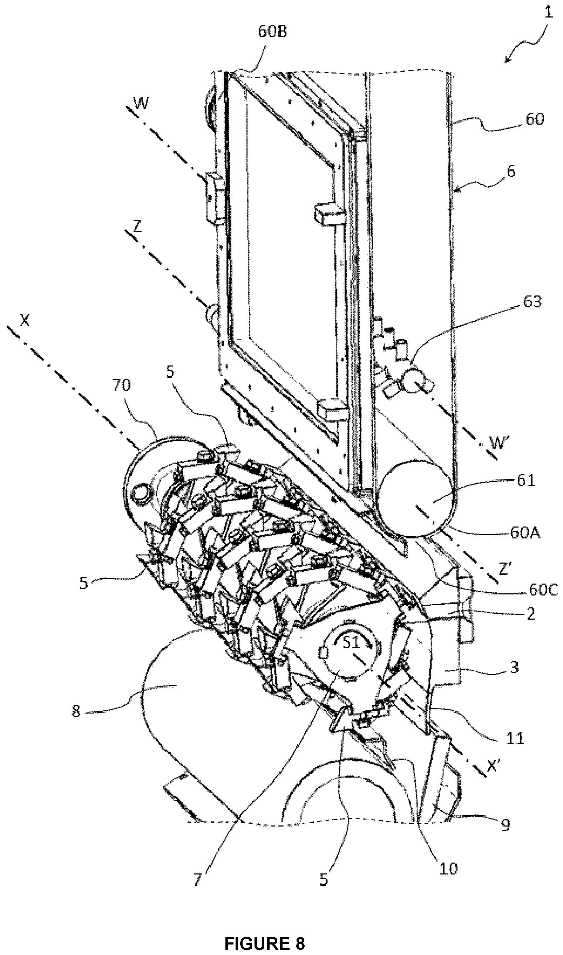

La figure 8 est une vue schématique en coupe transversale, selon un angle de vue différent de celui de la figure 5, de la partie du dispositif de formage illustré par la figure 5.

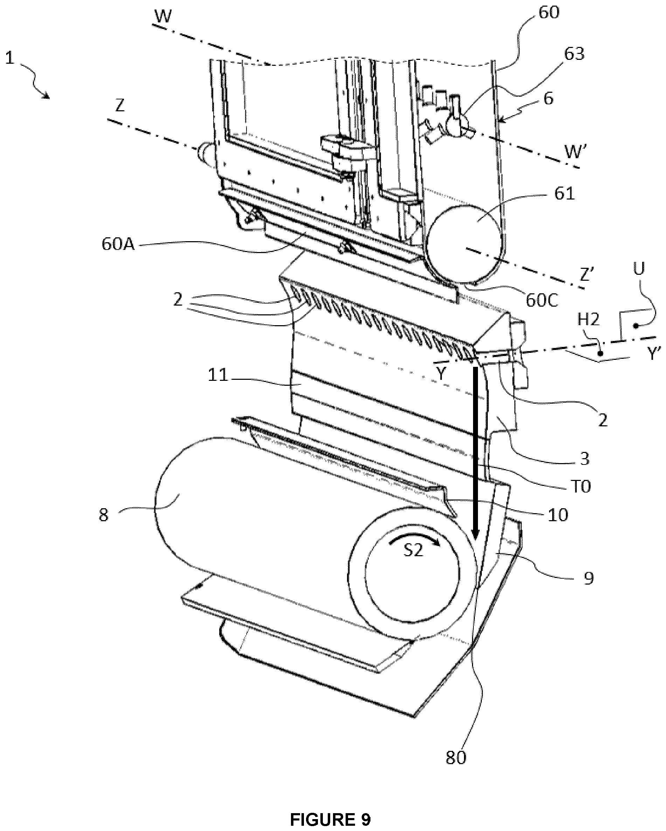

La figure 9 est une vue analogue à celle de la figure 8 à la différence principale près que le rouleau de découpe a été omis.

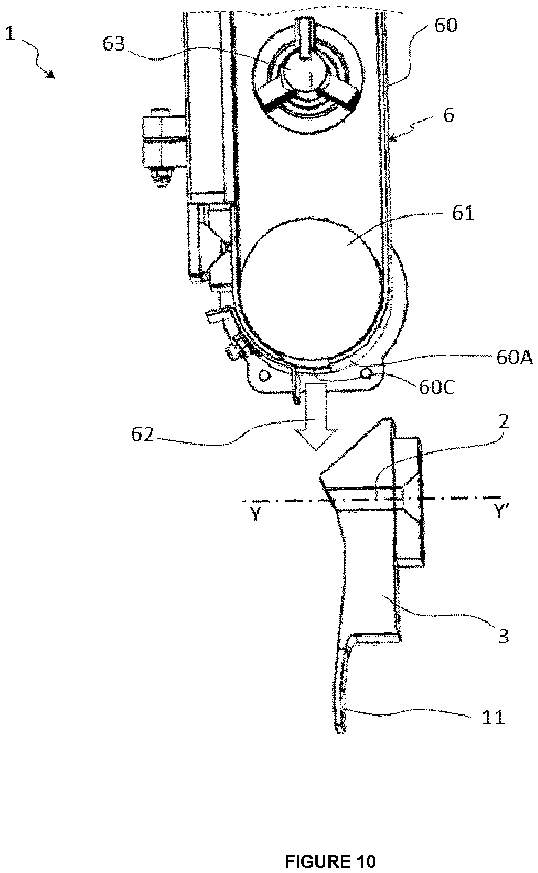

La figure 10 est une vue schématique en coupe transversale d'un détail référencé A sur la figure 9.
La figure 11 illustre, selon une vue schématique en coupe transversale, le trajet suivi par les pâtons découpés en sortie des buses d'extrusion du dispositif de formage selon l'invention.
La figure 12 illustre, selon une vue schématique en coupe transversale, un détail d'un couteau du rouleau de découpe du dispositif de formage selon l'invention.
La figure 13 illustre, selon une vue schématique en perspective plongeante, un module de découpe qui fait partie du rouleau de découpe mis en oeuvre par le dispositif de formage illustré aux figures précédentes.

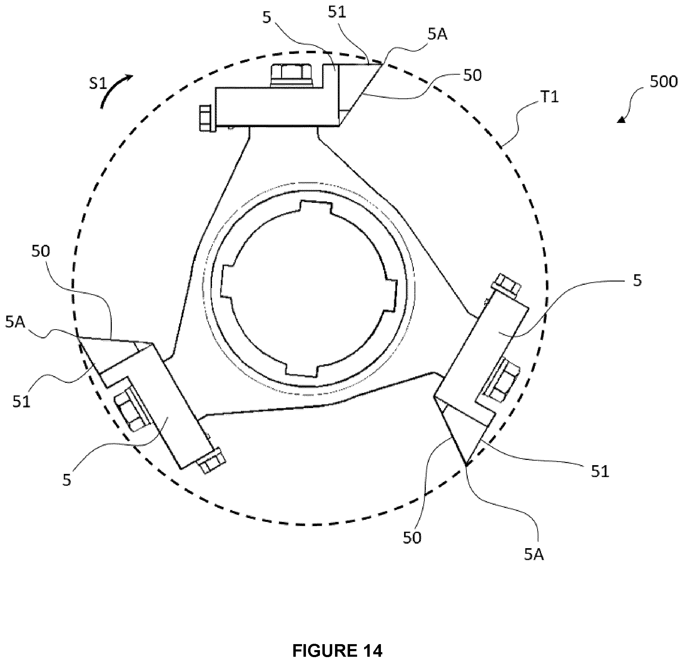

La figure 14 illustre, selon une vue de côté, le module de découpe de la figure 13.
La figure 15 illustre, selon une vue de face, deux modules de découpe similaires à celui des figures 13 et 14 disposés côte à côte, de façon adjacente, avec leurs couteaux respectifs décalés angulairement, lesdits deux modules de découpe de la figure 15 contribuant à former le rouleau de découpe du dispositif de formage illustré aux figures précédentes.

L'invention concerne un dispositif de formage 1 de pâtes alimentaires, qui est destiné à faire partie d'une installation de fabrication de pâtes alimentaires. Ladite installation de fabrication, qui constitue en tant que telle un des aspects de l'invention, est donc avantageusement une installation de pastification, pour fabriquer des pâtes alimentaires. L'installation de fabrication en question, qui inclut ledit dispositif de formage 1 selon l'invention, est avantageusement une installation de fabrication industrielle automatisée, conçue pour assurer de préférence une fabrication de pâtes en continu. De la même manière, le dispositif de formage 1 selon l'invention est lui-même un dispositif de formage industriel automatisé, conçu pour assurer de préférence un formage des pâtes alimentaires en continu.

Les pâtes alimentaires formées au moyen du dispositif de formage 1 selon l'invention, et fabriquées au moyen de l'installation de fabrication selon l'invention (laquelle inclut ledit dispositif de formage 1), sont destinées à être réchauffées et/ou cuites avant d'être consommées. Il s'agit donc de pâtes alimentaires qui ne sont pas prévues pour être consommées, mangées, en l'état, mais qui nécessitent au contraire une opération préalable de réchauffage et/ou de cuisson afin de développer pleinement leurs qualités organoleptiques. Les pâtes alimentaires en question peuvent être réchauffées ou cuites par immersion dans un liquide chaud, comme par exemple de l'eau portée à ébullition.

Alternativement, elles peuvent être destinées à être réchauffées ou cuites à la poêle, c'est-à-dire être poêlées, en présence par exemple d'un corps gras (huile végétale, beurre...). Au sens de l'invention, le terme « *pâte alimentaire* » n'est pas limité à une définition légale ou normative, et concerne tout aliment obtenu à partir d'un mélange qui inclut au moins une farine et/ou une semoule de céréale et un liquide d'hydratation. Avantageusement, lesdites pâtes alimentaires fabriquées au moyen du dispositif de formage 1 selon l'invention sont destinées à être conservées au réfrigérateur (par exemple à une température comprise entre 0°C et 4°C) avant cuisson et consommation, et sont destinées par exemple à être vendues au rayon « *frais* » des magasins. Lesdites pâtes alimentaires fabriquées au moyen du dispositif 1 selon l'invention sont avantageusement des pâtes farcies, comme par exemple des ravioles ou des tortellinis, c'est-à-dire qu'elles englobent un coeur de farce dont elles sont fourrées. Par exemple, la farce en question peut être une préparation comprenant du fromage ou une spécialité fromagère, et / ou une purée de légume(s) et / ou de la viande hachée, *etc.*

Lesdites pâtes alimentaires sont plus précisément destinées à être formées à partir d'une composition pâteuse P. Cette dernière est avantageusement fabriquée par malaxage et cuisson d'un mélange formé à partir au moins d'une part d'une farine et/ou d'une semoule d'au moins une céréale contenant des protéines capables de former du gluten et d'autre part d'un liquide d'hydratation. À l'issue du malaxage et de la cuisson, de préférence simultanés, dudit mélange, est obtenue une substance molle, malléable, qui se présente sous la forme d'une masse cohésive, sensiblement homogène, présentant la consistance d'une pâte, avec en particulier une capacité d'écoulement. La mise en oeuvre d'une céréale (ou d'un mélange de céréales) qui contient des protéines (typiquement des prolamines et des glutamines) capable de former du gluten confère à la composition pâteuse P une certaine élasticité, laquelle contribue avantageusement notamment à une bonne tenue des pâtes alimentaires lors du réchauffage ou de la cuisson, et à l'obtention d'une texture relativement ferme et élastique des pâtes après réchauffage ou cuisson de ces dernières. De préférence, ladite céréale est du blé. Ladite farine de céréales avantageusement mise en oeuvre pour obtenir la composition pâteuse est alors préférentiellement une farine de blé tendre, tandis que ladite semoule de céréales avantageusement mise en oeuvre pour obtenir la composition pâteuse est préférentiellement une farine de blé dur. Bien évidemment, d'autres céréales peuvent être mises en oeuvre, comme par exemple l'orge, l'épeautre, le seigle, ou encore l'avoine, cette liste n'étant pas limitative.

Le mélange à partir duquel est formé la composition pâteuse P peut inclure en outre d'autres ingrédients en plus de la farine et/ou de la semoule de céréales et du liquide d'hydratation. Ces ingrédients complémentaires peuvent inclure par exemple des oeufs, du lait, du gluten, des légumes ou extraits de légumes, ou encore des aromates, ou tout autre adjuvant.

Selon un mode de réalisation préférentiel particulier, le mélange à partir duquel est formé la composition pâteuse P inclut avantageusement un féculent, comme par exemple du tubercule de *Solanum tuberosum.* Dans ce cas, le mélange en question comprend préférentiellement des flocons (préférentiellement déshydratés) et/ou de la poudre et/ou des granules de tubercule de *Solanum tuberosum,* ou encore une purée de tubercule de *Solanum tuberosum* (préparation humide de tubercule de *Solanum tuberosum* écrasé), mélangés avec la farine et/ou la semoule de céréales et le liquide d'hydratation, pour former par exemple des produits en forme de boulettes ou boudins.

De préférence, le liquide d'hydratation est de l'eau, mais il peut alternativement s'agir d'un autre liquide, par exemple du lait ou un liquide d'origine végétale, ou tout autre liquide permettant, en étant dosé de manière appropriée, l'obtention d'une composition de consistance pâteuse. Le liquide d'hydratation peut éventuellement être déjà inclus, en tout ou partie, dans certains des autres ingrédients (par exemple dans de la purée de tubercule de *Solanum tuberosum*)*.*

De préférence, lesdites pâtes alimentaires sont des pâtes fraîches avec un taux d'humidité qui est supérieur à 12 % en masse, de façon préférentielle supérieur à 20 % en masse, et de façon encore plus préférentielle supérieur à 30 % en masse.

Avantageusement, les pâtes alimentaires fabriquées au moyen de l'installation de fabrication selon l'invention se présentent sous la forme de boulettes, boudins et/ou palets formés à partir de la composition pâteuse P, et qui sont éventuellement farcis ou fourrés, comme évoqué précédemment, avec une farce qui peut être une préparation comprenant du fromage ou une spécialité fromagère, et / ou une purée de légume(s) et / ou de la viande hachée. Lesdites pâtes alimentaires forment par exemple des tortellinis ou des ravioles.

Par exemple, dans le cas où les pâtes alimentaires fabriquées au moyen de l'installation de fabrication sont sous forme de boulettes ou boudins, le mélange permettant d'obtenir la composition pâteuse P est formé à partir au moins de :
- 15 % à 40 % en masse de farine et/ou de semoule de céréales ;
- 10 à 25 % en masse de flocons de tubercule de *Solanum tuberosum* déshydraté,
- 40 à 60 % en masse d'eau.

Ledit mélange est en revanche dépourvu d'agent levant (ou agent de levage), qu'il s'agisse d'un agent de levage chimique (poudre à lever ou levure chimique) ou naturelle (levure) de sorte que la composition pâteuse est avantageusement obtenue sans levage biologique (et donc sans fermentation) ou chimique.

Ladite installation de fabrication inclut ainsi au moins le dispositif de formage 1 selon l'invention, ainsi qu'au moins un poste de fabrication de ladite composition pâteuse P à partir de laquelle lesdites pâtes alimentaires sont destinées à être fabriquées. Ledit poste de fabrication de la composition pâteuse inclut par exemple des moyens de malaxage et cuisson des ingrédients formant la composition pâteuse, et par exemple des moyens de malaxage et cuisson d'un mélange formé à partir d'au moins d'une farine et/ou d'une semoule d'au moins une céréale contenant des protéines capables de former du gluten et d'un liquide d'hydratation.

De préférence, ladite installation de fabrication de pâtes alimentaires comprend une cuve conçue pour contenir ladite composition pâteuse P à partir de laquelle les pâtes alimentaires sont destinées à être formées, ladite cuve étant avantageusement conçue pour alimenter ledit dispositif de formage 1 et/ou faisant partie de ce dernier.

Comme illustré aux figures, le dispositif de formage 1 selon l'invention comprend des buses d'extrusion 2 par lesquelles est destinée à passer ladite composition pâteuse P, pour former, en sortie desdites buses 2, des extrudats à partir desquels les pâtes alimentaires sont destinées à être formées. Lesdites buses d'extrusion 2 sont par exemple associées à la cuve précitée pour être par exemple alimentées en composition pâteuse P provenant de ladite cuve. Selon ce mode de réalisation préférentiel, les buses d'extrusion 2 sont en communication fluidique avec l'intérieur de la cuve, pour permettre un écoulement de la composition pâteuse P contenue dans la cuve par les buses d'extrusion 2, vers l'extérieur. Les buses d'extrusion 2 se présentent avantageusement, comme illustré aux figures, sous la forme d'orifices, par exemple de forme circulaire, ménagés à travers l'épaisseur d'une plaque 3 (par exemple métallique) qui forme une filière d'extrusion. Lesdites buses d'extrusion 2 sont avantageusement disposées en rang, les unes à côté et à distance des autres, comme illustré. Ledit rang de buses d'extrusion 2 est avantageusement rectiligne et horizontal, comme illustré aux figures. Il est cependant parfaitement envisageable de prévoir une pluralité de rangs, et/ou de recourir à un ou plusieurs rangs qui s'étendent selon des directions rectilignes autres qu'horizontales, ou encore selon des profils curvilignes, sans pour autant que l'on sorte du cadre de l'invention.

La composition pâteuse est avantageusement destinée à passer simultanément à travers toutes les buses d'extrusion 2, de façon continue, de sorte que des extrudats, réalisés à partir de cordons continus P1 de composition pâteuse, sortent desdites buses d'extrusion 2.

Dans le cas où le dispositif 1 est destiné à fabriquer des pâtes alimentaires farcies, ledit dispositif 1 est avantageusement conçu pour associer la composition pâteuse avec une farce (ou garniture). Ladite association de la composition pâteuse et de la farce est effectuée par le dispositif 1 par exemple par co-extrusion de la composition pâteuse et de la farce, ce qui permet d'associer de manière rapide, simple et efficace la composition pâteuse et la farce, la composition pâteuse venant avantageusement envelopper la farce. Avantageusement, ladite co-extrusion correspond à un assemblage, une combinaison, de la composition pâteuse et de la farce par poussage conjoint de ces dernières au travers de filières ou buses d'extrusion. On obtient de la sorte avantageusement des boulettes, boudins et / ou palets farcis (ou fourrés), et par exemple des boudins cylindriques aux extrémités fermées et d'un poids unitaire préférentiellement compris entre 6 g et 12 g environ, farce incluse. Avantageusement, de tels boulettes, boudins et / ou palets peuvent être formés de 20 % à 50 % en masse de farce (par exemple, 30 % en masse) et de 50 % à 80 % en masse de composition pâteuse (par exemple, 70 % en masse). Des proportions différentes peuvent toutefois bien évidemment être mises en oeuvre, selon notamment la nature de la composition pâteuse et / ou de la farce, ou encore selon le profil organoleptique et / ou nutritionnel recherché.

Conformément à l'invention, le dispositif de formage 1 comprend également un rouleau de découpe 4 pour découper lesdits extrudats sortant desdites buses d'extrusion 2, afin de former des pâtons P2. Comme illustré aux figures, le rouleau de découpe 4 est avantageusement disposé en sortie des buses d'extrusion 2, c'est-à-dire à l'aval de ces dernières par rapport au sens d'écoulement de la composition pâteuse dans les buses 2. Le rouleau de découpe 4 permet ainsi avantageusement de découper de manière continue et cyclique les extrudats en sortie des buses d'extrusion 2 pour former, à une cadence prédéterminée impartie par la fréquence de découpe et la vitesse d'extrusion, des tronçons d'extrudats de dimensions prédéterminées qui constituent lesdits pâtons P2. Le rouleau de découpe 4 est avantageusement conçu pour découper automatiquement les extrudats issus de chacune des buses d'extrusion 2 en portions élémentaires qui forment lesdits pâtons P2, de préférence de façon cyclique, pour obtenir par exemple des pâtons en forme de boulettes, boudins et/ou palets de composition pâteuse P. Le rouleau de découpe 4 forme ainsi, dans le mode de réalisation préférentiel illustré aux figures, un rouleau de découpe cyclique.

Comme illustré aux figures, ledit rouleau de découpe 4 est monté mobile à rotation, relativement auxdites buses d'extrusion 2, selon un premier axe de rotation X-X'. Avantageusement, ledit dispositif de formage 1 comprend un bâti qui supporte les buses d'extrusion 2 ainsi que le rouleau de découpe 4. Lesdites buses d'extrusion 2 sont avantageusement fixes par rapport audit bâti, tandis que ledit rouleau de découpe 4 est monté à rotation par rapport audit bâti, selon le premier axe de rotation X-X'. Le rouleau de découpe 4 est avantageusement motorisé. Dans ce cas, le dispositif de formage 1 comprend avantageusement un moteur (par exemple électrique - non illustré) qui est relié audit rouleau de découpe 4 pour entraîner ce dernier en rotation selon le premier axe de rotation X-X', de préférence à une vitesse prédéterminée constante. De préférence, ledit rouleau de découpe 4 s'étend longitudinalement selon une direction d'extension longitudinale sensiblement parallèle audit premier axe de rotation X-X'. Dans ce mode de réalisation préférentiel, qui correspond à celui illustré aux figures, le rouleau de découpe 4 affecte la forme globale d'un cylindre muni d'arêtes tranchantes à sa périphérie, comme cela sera décrit plus en détail dans ce qui suit. Le rouleau de découpe 4 est avantageusement disposé au droit et en regard des buses d'extrusion 2 (comme illustré), pour couper chaque extrudat de façon cyclique (sous l'effet de ladite rotation, avantageusement impartie par le moteur), de préférence sensiblement immédiatement à la sortie des buses d'extrusion 2.

La découpe des extrudats, par le rouleau de découpe 4, sensiblement dès leur sortie des buses 2, permet de maîtriser et contrôler la forme et le calibre des pâtons P2 de manière optimale, en évitant en particulier toute déformation ou détérioration intempestive des extrudats qui pourrait survenir lorsque les extrudats se retrouvent en dehors des buses 2, où ils ne sont plus ni protégés ni guidés.

Conformément à l'invention, le dispositif de formage 1 comprend par ailleurs un dispositif de farinage 6 conçu pour distribuer de la farine (par exemple de la farine de blé) à l'aval des buses d'extrusion 2, afin que lesdits pâtons P2 soient revêtus au moins partiellement de farine, ce qui permet d'assurer une lubrification sèche limitant un risque de voir les pâtons P2 coller entre eux et/ou à des éléments du dispositif de formage 1 (en particulier le rouleau de découpe 4).

Comme illustré aux figures, ledit rouleau de découpe 4 comprend une pluralité de couteaux individuels 5, qui sont avantageusement distincts et distants les uns des autres. Lesdits couteaux 5 sont avantageusement identiques les uns aux autres, et sont de préférence réalisés en un matériau métallique, par exemple en laiton. Chaque couteau 5 est disposé en périphérie du rouleau de découpe 4, comme illustré aux figures. Les couteaux 5 de ladite pluralité de couteaux qui équipe le rouleau de découpe 4 sont avantageusement espacés les uns des autres, et forment des excroissances coupantes localisées indépendantes les unes des autres. Cette configuration permet en particulier de distribuer efficacement de la farine (ou tout autre ingrédient de lubrification pulvérulent ou liquide) sur les extrudats issus des buses 2 au moyen dudit dispositif de farinage 6, car la farine peut ainsi circuler aisément dans les espaces interstitiels qui séparent lesdits couteaux 5 entre eux, sans être bloquée par ces derniers, ce qui permet un farinage efficace et ainsi une lubrification optimale.

Comme illustré aux figures, lesdits couteaux 5 sont avantageusement répartis selon une distribution hélicoïdale le long dudit premier axe de rotation X-X'. En d'autres termes, lesdits couteaux 5 sont disposés le long du rouleau de découpe 4 selon une distribution en hélice, en spirale. Cela signifie que les couteaux individuels 5 sont disposés en enroulement autour du premier axe de rotation X-X', c'est-à-dire qu'ils forment des spires autour dudit premier axe de rotation X-X'. Grâce à cet agencement hélicoïdal, les extrudats issus des buses d'extrusion 2 sont découpés les uns après les autres de façon cyclique (i.e. successivement de manière cyclique), et non tous en même temps de manière cyclique (i.e. simultanément de manière cyclique). La répartition hélicoïdale des couteaux 5 permet d'assurer ainsi un cycle de découpe séquentielle qui étale les efforts mécaniques dans le temps et le long du rouleau 4 de découpe, limitant ainsi les sollicitations mécaniques susceptibles de détériorer le matériel et/ou d'affecter la précision de découpe. Ainsi, la mise en oeuvre de couteaux individuels 5 distincts, espacés les uns des autres, combinée avec une répartition hélicoïdale desdits couteaux 5 conduit à une efficacité, robustesse et précision de découpe optimales.

Lesdits couteaux 5 peuvent être répartis le long de l'axe de rotation X-X' pour former une seule et même hélice qui s'étend par exemple sur toute la longueur du rouleau de découpe 4, ou encore, alternativement, pour former plusieurs hélices, parallèles ou entrelacées ou entrecroisées, qui s'étendent sur toute la longueur du rouleau de découpe 4. Le recours à une distribution des couteaux 5 selon plusieurs hélices (de préférence parallèles entre elles) le long du rouleau 4 est préféré, comme illustré aux figures, car il permet d'atteindre une cadence de fabrication optimale tout en conférant une grande robustesse et durabilité au rouleau de découpe 4.

Avantageusement, les couteaux individuels 5 sont conçus pour exercer un effort d'entraînement du haut vers le bas sur chacun desdits pâtons P2 lors de la découpe des extrudats par lesdits couteaux 5 pour former lesdits pâtons P2, afin d'impartir à chaque pâton P2 une trajectoire d'éjection T0 exclusivement descendante, c'est-à-dire une trajectoire au cours de laquelle chaque pâton P2 perd sensiblement continûment de l'altitude, sous l'effet combiné de l'effort d'entraînement exercé sur lui de haut en bas par le couteau 5 qui l'a détaché de l'extrudat dont il est issu, et de la gravité. À cette fin, la position du rouleau de découpe 4 par rapport aux buses d'extrusion 2, et le sens de rotation S1 du rouleau de découpe 4 selon le premier axe de rotation X-X', sont choisis pour que chaque couteau 5 vienne découper un extrudat par le dessus, tout en repoussant concomitamment et/ou subséquemment le pâton P2 issu de ladite découpe vers le bas, en direction du sol.

Grâce à cette caractéristique, la trajectoire post-découpe des pâtons P2 est simplifiée et directe, ce qui permet de limiter le recours à des éléments de guidage. De plus, une telle configuration permet d'éviter les risques de trajectoires erronées des pâtons P2 sous l'effet de la force centrifuge, comme dans les installations de l'art antérieur. Cette caractéristique permet ainsi de recourir à des vitesses élevées de rotation du rouleau de découpe 4, ce qui permet une haute cadence de fabrication, en limitant le risque d'incident.

Avantageusement, le dispositif de farinage 6 est quant à lui disposé au-dessus de la sortie des buses 2, comme illustré aux figures, pour fariner lesdits extrudats sensiblement dès leur sortie des buses 2, avant leur découpe par lesdits couteaux 5. Le dispositif de farinage 6 est ainsi conçu pour saupoudrer de farine les extrudats dès leur sortie des buses 2, pour que lorsque l'un desdits couteaux 5 arrive au contact de l'extrudat pour le découper et former un pâton P2, ledit extrudat soit recouvert, même partiellement ou imparfaitement, d'une couche de farine, au moins sur le dessus, c'est-à-dire sur une zone supérieure avec laquelle le couteau 5 entre en contact pour d'une part découper l'extrudat et d'autre part entraîner le pâton P2 découpé vers le bas. Du fait de cette disposition très spécifique, qui combine un farinage par le haut, immédiatement en sortie des buses 2, et un sens de rotation S1 du rouleau de découpe 4 conçu pour entraîner les pâtons P2 exclusivement du haut vers le bas, la découpe est assurée de manière particulièrement nette et propre, grâce au dépôt de farine sur les extrudats avant la coupe, ce qui garantit une excellente lubrification. Cette disposition évite en outre au flux de farine issu du dispositif de farinage 6 d'être contrecarré par la trajectoire des couteaux 5, grâce d'une part au sens de rotation spécifique S1 qui rabat les pâtons P2 vers le bas, et d'autre part au caractère individuel des couteaux 5, qui sont distincts les uns des autres et séparés les uns des autres selon toutes les directions de l'espace. La farine peut ainsi plus facilement atteindre les extrudats, et la consommation en farine peut être maîtrisée et réduite.

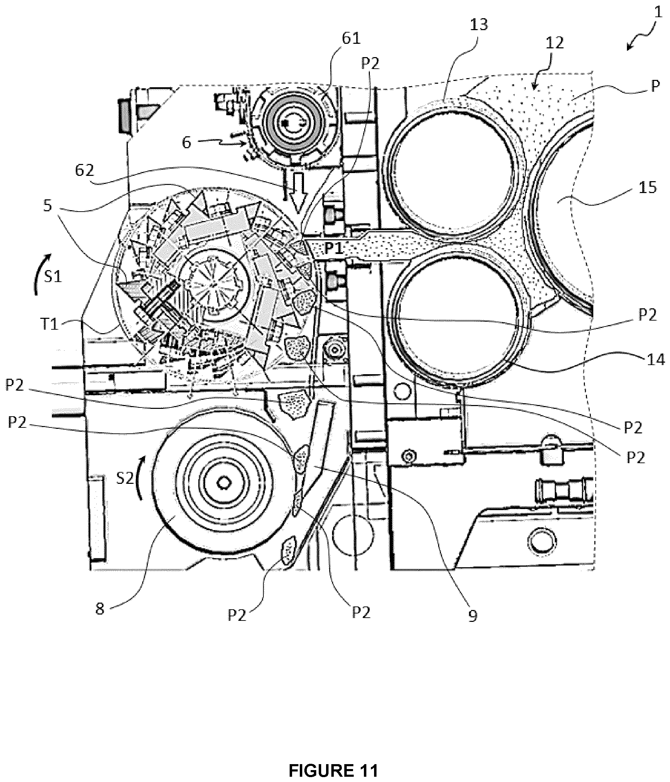

En outre, la trajectoire simplifiée des pâtons P2, qui ne comporte avantageusement aucune composante ascendante (c'est-à-dire du bas vers le haut), permet d'obtenir un dispositif de formage 1 particulièrement compact, avec moins d'éléments de guidage, ce qui limite en outre les contraintes mécaniques auxquelles sont exposés les pâtons P2, contrairement aux installations de l'art antérieur où les pâtons étaient susceptibles de venir s'écraser contre des plaques de guidage, ce qui pouvait les abimer et multiplier les risques de mauvaise trajectoire. Au contraire, selon l'invention, la trajectoire est particulièrement simplifiée, et de préférence essentiellement sensiblement rectiligne ou quasi-rectiligne, comme illustré par la figure 11.

Avantageusement, lesdits couteaux 5 comprennent des arêtes de coupe 5A respectives qui forment chacune un bord tranchant, lequel est de préférence sensiblement rectiligne (mais alternativement pourrait parfaitement être courbe, et présenter par exemple une forme incurvée convexe ou concave). Chaque arête de coupe 5A est avantageusement rectiligne, et préférentiellement parallèle audit premier axe de rotation X-X' et à équidistance de ce dernier. Les arêtes de coupe 5A des couteaux 5 parcourent ainsi chacune des trajectoires de découpe T1 circulaires respectives sous l'effet de la rotation dudit rouleau de découpe 4 selon le premier axe de rotation X-X'. Ainsi, la trajectoire T1 suivie par chaque arête de coupe 5A sous l'effet de la rotation du rouleau de découpe 4 s'inscrit dans un cylindre de révolution fictif d'axe X-X'. Conformément au mode de réalisation préférentiel illustré aux figures, chaque buse d'extrusion 2 est avantageusement positionnée au droit d'une seule desdites trajectoires circulaires T1 suivies par lesdites arêtes de coupe 5A, pour que chaque couteau 5 assure la découpe cyclique d'un seul desdits extrudats issu d'une seule desdites buses d'extrusion 2. Grâce à cette mesure technique, la découpe est précise et les couteaux 5 sont préservés de manière optimale de toute détérioration.

Avantageusement, chaque arête de coupe 5A est avantageusement formée par la jonction de deux pans inclinés l'un par rapport à l'autre. Par exemple, chaque couteau 5 comprend un bloc de coupe de forme sensiblement polyédrique qui présente une première face 50 et une deuxième face 51 inclinées l'une par rapport à l'autre et dont l'intersection forme ladite arête de coupe 5A. Le bloc de coupe présente ainsi un caractère relativement massif, qui contribue à la robustesse du couteau 5, ainsi qu'à sa fiabilité et à sa précision.

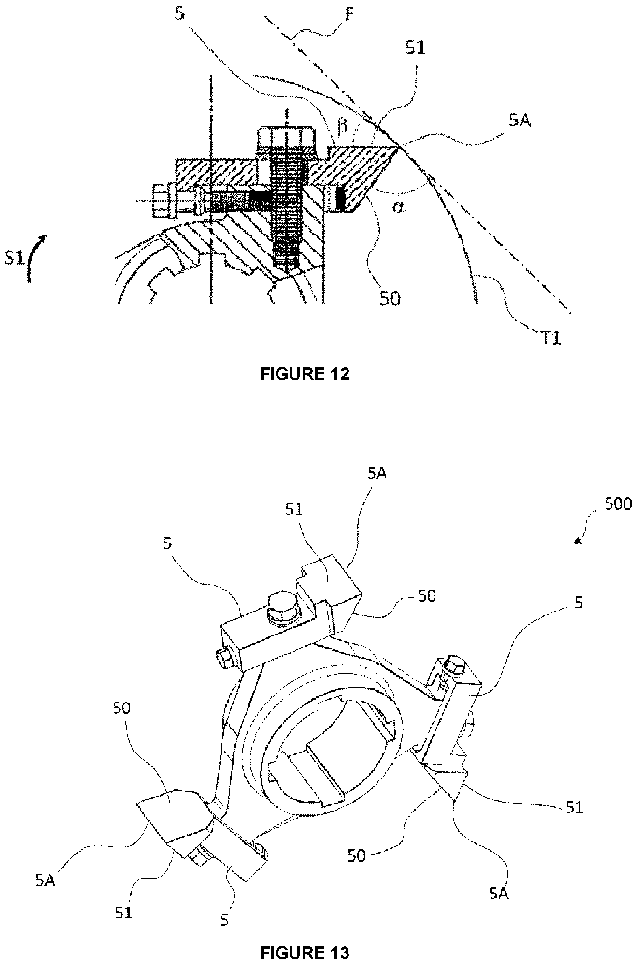

Avantageusement, ladite première face 50 du bloc de coupe de chaque couteau 5 est située à l'avant de ladite deuxième face 51 dudit bloc de coupe, par rapport au sens de rotation S1 du rouleau de découpe 4. Cela signifie que la première face 50 est celle qui la première atteint l'extrudat à découper, puis repousse vers le bas le pâton P2 une fois ce dernier détaché de l'extrudat dans lequel il a été découpé. Réciproquement, la deuxième face 51 est avantageusement située à l'arrière de la première face 50 par rapport au sens de rotation S1 du rouleau de découpe 4. Avantageusement, la première face 50 présente un caractère sensiblement plan, c'est-à-dire qu'elle n'est avantageusement pas incurvée, et en particulier elle ne constitue pas une concavité. Ceci permet de limiter le risque de voir les pâtons P2 restés coincés ou collés sur les couteaux 5, et permet également d'impartir à chaque pâton P2 une trajectoire d'éjection T0 particulièrement nette et précise. À cette fin, la première face 50 forme, avec un plan F qui est tangent à ladite trajectoire d'éjection T0 et qui passe par ladite arête de coupe 5A (cf. figure 12), un angle d'éjection α compris entre 60° et 110°, de préférence entre 70° et 100°, de façon encore plus préférentielle entre 75° et 85°, de façon particulièrement préférée sensiblement égal à 80°. Le recours à une telle valeur d'angle d'éjection α permet d'optimiser la trajectoire d'éjection T0 descendante de chaque pâton P2, pour lui conférer un caractère sensiblement rectiligne et vertical ou quasi-vertical, permettant ainsi de tirer parti au mieux de la gravité. Avantageusement, la deuxième face 51 forme quant à elle, avec le plan F qui est tangent ladite trajectoire d'éjection T0 et qui passe par ladite arête de coupe 5A, un angle de découpe β compris avantageusement entre 20° et 70°, de préférence entre 30° et 60°, de façon encore plus préférentielle entre 45° et 50°, et de façon particulièrement préférée sensiblement égal à 45°. Le recours aux valeurs susvisées pour l'angle de découpe β permet de ménager un espace libre L suffisant à l'arrière du couteau 5, une fois que celui-ci a découpé le pâton 2, permettant ainsi à l'extrudat qui progresse en continu hors de la buse 2 de faire saillie à l'extérieur de la buse 2 sans interférer avec le couteau 5 qui vient de passer.

Avantageusement, lesdites trajectoires de découpe T1 affleurent lesdites buses 2, pour découper lesdits extrudats sensiblement dès la sortie des buses 2, c'est-à-dire en d'autres termes au plus près de la sortie desdites buses 2. Cela signifie que le cylindre de révolution fictif précité, dans lequel s'inscrivent les trajectoires T1 opérées par chaque arête de coupe 5A, tangente sensiblement la sortie de chaque buse d'extrusion 2, comme cela ressort des figures. Grâce à cette caractéristique, et comme déjà évoqué dans ce qui précède, les pâtons P2 sont formés au plus près de la sortie des buses d'extrusion 2, limitant ainsi les risques de détérioration de l'extrudat lorsque ce dernier n'est plus guidé et contraint par les parois de la buse 2. Cette configuration favorise en outre la compacité du dispositif de formage 1, et permet d'optimiser le farinage, en le concentrant sur une zone réduite de l'espace, au plus près de la sortie des buses 2.

Avantageusement, le dispositif de formage 1 comprend un jeu J entre les trajectoires de découpe T1 d'une part et les buses 2 d'autre part, ledit jeu J étant par exemple compris entre 0,3 et 8 mm, de façon préférentielle entre 0,3 et 5 mm, et de façon encore plus préférentielle entre 1 et 3 mm.

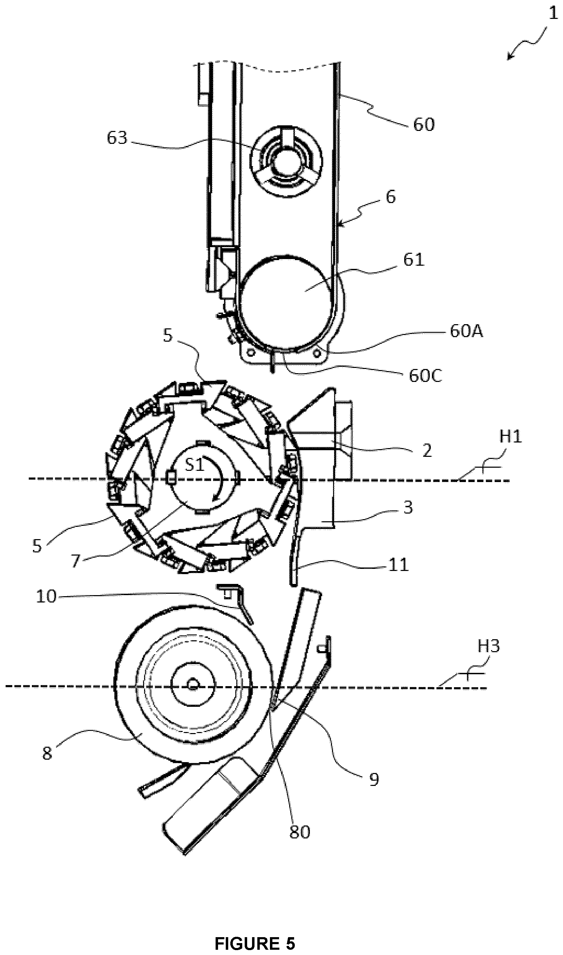

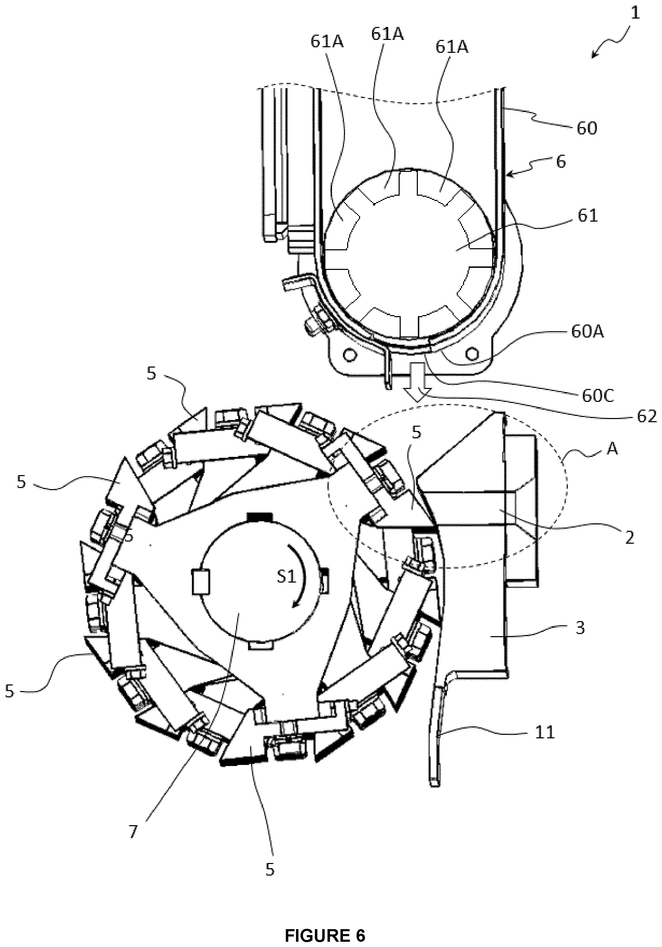

Avantageusement, comme illustré aux figures, lesdites buses 2 présentent un profil de sortie qui est courbe et suit localement le profil desdites trajectoires de découpe T1. En d'autres termes, les buses 2 présentent un profil de sortie (visible par exemple aux figures 5 et 6) qui suit localement la courbure du cylindre de révolution fictif d'axe X-X' dans lequel s'inscrivent les trajectoires de découpe T1 circulaires. Cela signifie, dans le mode de réalisation illustré aux figures, que la filière d'extrusion 3 présente, du côté des sorties des buses 2, une forme sensiblement incurvée, concave, qui épouse localement le profil des trajectoires de découpe T1 inscrites dans le cylindre fictif précité.

Grâce à cette caractéristique, le jeu J susvisé est avantageusement sensiblement constant, et minimal, au moins au niveau de la sortie de chacune des buses 2, ce qui permet d'optimiser l'opération de découpe en la pratiquant au plus près de la sortie des buses d'extrusion 2.

Avantageusement, chacune desdites buses d'extrusion 2 définit une direction d'extrusion respective Y-Y', qui correspond à la direction de déplacement du cordon P1 de composition pâteuse P au sein desdites buses 2. Avantageusement, lesdites directions d'extrusion Y-Y' définies par chacune des buses 2 sont parallèles entre elles et coplanaires. De préférence, chacune desdites directions d'extrusion Y-Y' est inclinée par rapport à la verticale selon un angle compris entre 45° et 135°, de façon encore plus préférentielle compris entre 60° et 100°, de façon particulièrement préférée (conformément au mode de réalisation illustré aux figures) sensiblement égal à 90°. Dans le mode de réalisation illustrée, les directions d'extrusion Y-Y' sont sensiblement horizontales (perpendiculaires à la verticale), avec le rouleau de découpe 4 disposé au droit des buses 2, de façon à croiser ces dernières, ledit premier axe de rotation X-X' étant lui aussi horizontal. Un tel agencement permet une construction particulièrement compacte et fiable, avec un risque limité de voir des pâtons P2 être entraînés intempestivement par le rouleau de découpe 4 selon des trajectoires inappropriées. Un tel agencement facilite en outre les opérations de démontage et de maintenance, en limitant en particulier le travail en hauteur du personnel chargé de ces tâches.

Avantageusement, le premier axe de rotation X-X' s'inscrit dans un premier plan H1, qui est par exemple horizontal, tandis que chaque direction d'extrusion Y-Y' s'inscrit dans un deuxième plan U, qui est par exemple un plan vertical, perpendiculaire audit premier plan H1. Ainsi, le rouleau de découpe 4 s'étend perpendiculairement aux trajectoires de sortie desdits extrudats, définies par les buses 2 et correspondant aux directions d'extrusion respectives Y-Y'. Ceci permet une découpe précise et nette, qui est uniforme et homogène sur toute la longueur du rouleau de découpe 4.

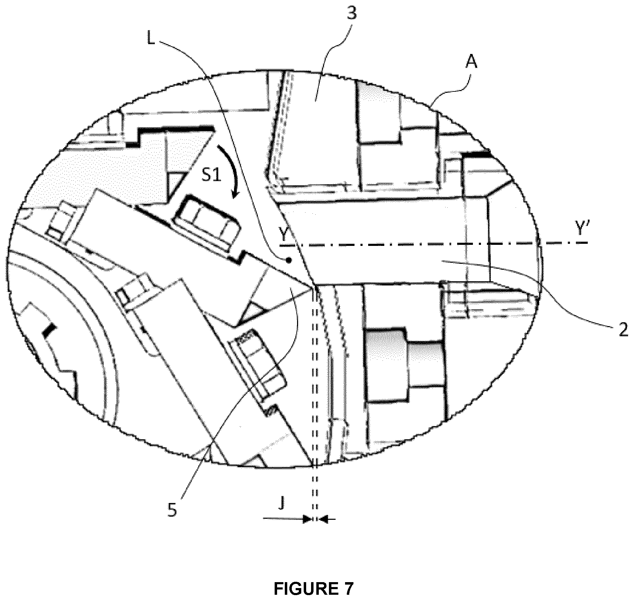

Avantageusement, les buses 2 sont agencées relativement au rouleau de découpe 4 pour que leurs directions d'extrusion respectives Y-Y' ne croisent pas ledit premier axe de rotation X-X'. Dans le mode de réalisation préférentiel illustré aux figures, les directions d'extrusion respectives Y-Y' s'inscrivent avantageusement dans un plan horizontal H2 qui est préférentiellement parallèle au plan horizontal H1 dans lequel s'inscrit préférentiellement le premier axe de rotation X-X', et qui est distant de ce dernier. Avantageusement, le plan horizontal H2 dans lequel s'inscrivent préférentiellement les directions d'extrusion respectives Y-Y' est situé au-dessus du premier plan H1, comme illustré aux figures. Cela a pour conséquence que les directions d'extrusion respectives Y-Y' ne sont pas alignées avec des diamètres du cylindre fictif d'axe X-X' dans lequel s'inscrivent les trajectoires de découpe circulaires T1. Dans ce mode de relation préférentiel, le profil de sortie des buses 2, qui suit localement le profil des trajectoires de découpe T1 (comme illustré aux figures - voir en particulier la figure 7), présente un caractère asymétrique, en biseau, ce qui permet d'opérer une découpe plus efficace et plus nette, et de préserver la forme du pâton 2, grâce au fait que le sommet de chaque extrudat issu de chaque buse 2 est guidé plus longtemps à l'intérieur de la buse 2 que ne l'est la base de l'extrudat opposée verticalement audit sommet.

Avantageusement, lesdits couteaux 5 sont répartis en une pluralité de groupes de n couteaux 5, avec n ≥ 2, et de préférence n ≥ 3. Chacun desdits groupes de n couteaux 5 présente de préférence une symétrie de rotation discrète d'ordre n selon ledit premier axe de rotation X-X'. Lesdits groupes de n couteaux 5 sont avantageusement répartis à intervalles réguliers, en rang les uns derrière les autres le long dudit premier axe de rotation X-X', avec un décalage angulaire entre deux groupes adjacents, pour réaliser ainsi ladite distribution hélicoïdale le long dudit premier axe de rotation X-X'. Du fait de ce décalage angulaire, les couteaux 5 de chaque groupe de couteaux 5 adjacents au sein du rang ne sont pas alignés selon la direction d'extension longitudinale (parallèle au premier axe de rotation X-X'), de sorte à suivre un profil en hélice le long du rouleau de découpe 4. Ceci permet de faire en sorte que les extrudats issus des buses d'extrusion 2 soient découpés les uns après les autres, de façon cyclique, et non tous en même temps de manière cyclique, avec les avantages (énoncés précédemment) qui découlent d'un tel cycle de découpes successives le long du rouleau 4.

Lesdits groupes de n couteaux 5 sont avantageusement identiques entre eux. Dans le mode de réalisation préférentiel illustré aux figures, les couteaux 5 sont répartis en une pluralité de groupes identiques de trois couteaux (c'est-à-dire que n = 3), chacun desdits groupes présentant une symétrie de rotation discrète d'ordre 3 selon le premier axe de rotation X-X'. Cela signifie que les couteaux 5 d'un même groupe sont avantageusement disposés selon une répartition angulaire régulière autour du premier axe de rotation X-X', comme illustré aux figures. Lesdits couteaux 5 d'un même groupe sont en d'autres termes disposés à équidistance les uns des autres, c'est-à-dire qu'ils sont équi-angulairement répartis, en étant en l'espèce séparés deux à deux d'un angle sensiblement égal à 120°. Dans le mode de réalisation illustré aux figures, chaque groupe de n couteaux (avec en l'espèce n = 3) est avantageusement décalé angulairement avec chaque autre groupe qui lui est adjacent, de façon à distribuer les couteaux 5 en hélice autour du premier axe de rotation X-X'. Dans ce mode de réalisation, où chaque groupe inclut trois couteaux 5 équi-angulairement répartis autour du premier axe X-X', les couteaux 5 sont agencés pour former trois hélices parallèles et de même pas qui s'étendent sur toute la longueur du rouleau de découpe 4, autour du premier axe X-X'.

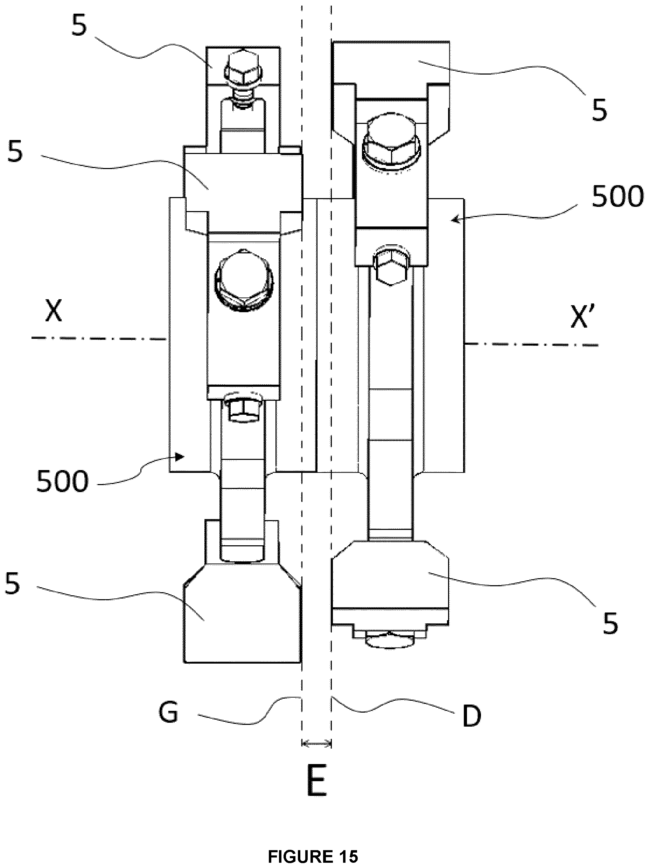

Avantageusement, chaque groupe de couteaux 5 s'étend, selon une direction d'extension longitudinale parallèle audit premier axe de rotation X-X', entre des plans gauche G et droit D perpendiculaires audit premier axe de rotation X-X'. Comme illustré en particulier à la figure 15, le plan gauche G de chaque groupe de n couteaux 5 est distant du plan droit D d'un autre groupe de n couteaux 5 qui lui est adjacent au sein dudit rang de groupes de couteaux 5, pour ménager un espace intergroupe E libre selon la direction d'extension longitudinale (laquelle est parallèle audit premier axe de rotation X-X'). Ainsi, les couteaux 5 d'un même groupe sont séparés de ceux appartenant à un autre groupe adjacent au sein du rang de groupes par l'espace interstitiel libre E selon la direction d'extension longitudinale. En d'autres termes, les couteaux 5 d'un même groupe sont sensiblement coplanaires, c'est-à-dire qu'ils sont tous sécants avec un même plan médian (qui est avantageusement un plan de symétrie pour le groupe concerné) perpendiculaire au premier axe de rotation X-X', lesdits plans médians de chaque groupe étant espacés les uns des autres. Grâce à la présence de l'espace longitudinal libre E, il est possible de saupoudrer efficacement de la farine (ou tout autre ingrédient de lubrification pulvérulent ou liquide) sur les extrudats issus des buses 2, à partir du dispositif de farinage 6 disposé au-dessus du rouleau 4 de découpe et des buses 2. La farine peut ainsi circuler aisément dans les espaces interstitiels E sans être bloquée par les couteaux 5, ce qui permet un farinage efficace ainsi qu'une lubrification optimale.

Avantageusement, le rouleau de découpe 4 comprend une âme centrale allongée qui s'étend longitudinalement de façon parallèle audit premier axe de rotation X-X', de préférence coaxialement à ce dernier, ainsi que des supports qui font localement saillie de ladite âme allongée et portent chacun l'un desdits couteaux 5. En d'autres termes, l'âme centrale allongée forme avantageusement un axe central à partir duquel s'étendent radialement lesdits supports, qui portent chacun à leur extrémité libre au moins un couteau 5, et de préférence un seul couteau 5.

Dans le mode de réalisation préférentiel illustré aux figures, le rouleau de découpe 4 est modulaire, c'est-à-dire qu'il est formé d'un ensemble de modules (composants élémentaires) associés entre eux pour former une unité de découpe monobloc, qui constitue ledit rouleau de découpe 4. Plus précisément, le rouleau de découpe 4 comprend une pluralité de modules 500, chacun desdits modules 500 étant constitué d'une unité individuelle distincte et indépendante. Lesdits modules 500 sont de préférence identiques les uns aux autres, ce qui permet un haut degré de standardisation. Chacun desdits modules 500 comprend avantageusement un noyau qui porte au moins l'un desdits couteaux 5. Chaque noyau de chacun des modules 500 est avantageusement réalisé en un matériau métallique, par exemple en acier inoxydable. Comme illustré aux figures, lesdits modules 500 sont assemblés en rang les uns aux autres par leurs noyaux respectifs, pour former un sous-ensemble unitaire de modules 500 immobilisés les uns par rapport aux autres. En d'autres termes, les noyaux de chacun desdits modules 500 sont attachés les uns aux autres, directement ou par l'intermédiaire d'une pièce de liaison (comme dans le mode de réalisation illustré aux figures), les uns derrières les autres (i.e. les uns à la suite des autres), pour former un rang de modules 500 dans lequel chaque module 500 est interposé entre deux autres modules (à l'exception bien sûr des deux modules 500 extrêmaux situés respectivement à chaque extrémité du rang formant le sous-ensemble unitaire de modules 500). Le rang de noyaux assemblés entre eux forme ainsi avantageusement à la fois l'âme centrale allongée et les supports qui portent les couteaux 5.

La liaison mécanique mise en oeuvre pour relier tous les noyaux les uns aux autres est avantageusement une liaison qui permet d'immobiliser lesdits noyaux les uns par rapport aux autres, au moins en rotation. Cela signifie qu'au sein dudit sous-ensemble unitaire de modules 500, lesdits modules 500 ne jouissent avantageusement d'aucune faculté de mobilité les uns par rapport aux autres, en particulier en rotation.

Avantageusement, chaque module 500 forme l'un desdits groupes de n couteaux 5 évoqués précédemment. Par exemple, dans le mode de réalisation préférentiel illustré aux figures, les couteaux 5 sont répartis en une pluralité de groupes de trois couteaux, chaque groupe de trois couteaux étant lui-même formé par l'un desdits modules 500.

Avantageusement, le rouleau de découpe 4 comprend un arbre central 7, qui est coaxial audit premier axe de rotation X-X' et qui est avantageusement conçu pour impartir au sous-ensemble unitaire de modules 500 un mouvement de rotation selon le premier axe de rotation X-X'. Ledit arbre central 7 est avantageusement réalisé en métal, par exemple en acier inoxydable. L'arbre central 7 forme ainsi un arbre de transmission, qui présente avantageusement une forme globalement cylindrique, pleine ou creuse (forme tubulaire). Ledit arbre central 7 est avantageusement pourvu, à l'une de ses extrémités, d'un flasque 70. Ledit flasque 70 est relié à un arbre de sortie du moteur précité, qui assure la rotation, à une vitesse prédéterminée, de l'arbre central 7 selon le premier axe de rotation X-X'.

Avantageusement, et comme illustré aux figures, chacun desdits noyaux de chaque module 500 forme un moyeu qui est pourvu d'un orifice central et est enfilé sur ledit arbre central 7 pour que ce dernier passe par l'orifice central de chaque moyeu. Tous les modules 500 sont ainsi avantageusement enfilés les uns à la suite des autres, sur et le long de l'arbre central 7, lequel traverse les moyeux formés par les noyaux de chaque module 500. Le rang de moyeux disposés les uns à la suite des autres, de préférence en contact deux à deux, forme ainsi avantageusement, avec l'arbre central 7, ladite âme centrale allongée évoquée précédemment. Chaque noyau 500 forme avantageusement, dans ce mode de réalisation, un manchon (ou bague) enfilé sur l'arbre central 7 et portant sur sa surface extérieure, en périphérie, les couteaux 5. Ces derniers sont reliés au moyeu qui les porte par des rayons respectifs. Lesdits rayons correspondent aux supports évoqués précédemment, qui portent les couteaux 5 en faisant saillie de l'âme allongée. Les moyeux formés par les noyaux viennent avantageusement en butée les uns contre les autres, c'est-à-dire que le moyeu d'un module 500 donné vient axialement en butée contre le moyeu d'un autre module 500 qui lui est adjacent dans ledit rang de modules 500 formant le sous-ensemble unitaire. Avantageusement, chaque noyau déborde latéralement (selon la direction d'extension longitudinale) des plans gauche G et droit D, ce qui permet de ménager l'espace libre E évoqué précédemment, par simple mise en butée des modules 500 les uns contre les autres, sur et le long dudit arbre central 7.

Avantageusement, afin de permettre à l'arbre central 7 d'entraîner en rotation les modules 500 et assurer ainsi l'opération de découpe cyclique séquentielle en sortie des buses d'extrusion 2, le rouleau de découpe 4 comprend des moyens de liaison en rotation de chaque moyeu audit arbre central 7. Lesdits moyens de liaison en rotation comprennent par exemple, conformément au mode de réalisation illustré aux figures, des moyens de liaison par clavetage. Bien entendu, l'invention n'est pas limitée à des moyens de liaison en rotation par clavetage comme illustré. Il est par exemple tout à fait envisageable de recourir alternativement à des moyens de liaison par cannelures ou dentelures.

Avantageusement, le dispositif de farinage 6 comprend une trémie 60 destinée à contenir de la farine. La trémie 60 est disposée au-dessus de la sortie des buses d'extrusion 2, comme illustré aux figures. Plus précisément, ladite trémie 60 est avantageusement pourvue d'un fond 60A, qui présente par exemple une forme de portion de cylindre, par exemple une forme sensiblement hémicylindrique, à partir duquel s'élève des parois latérales planes qui définissent un récipient de forme avantageusement parallélépipédique. Ledit récipient est pourvu d'une ouverture supérieure d'approvisionnement 60B opposée audit fond 60A. Une ouverture de distribution de farine 60C est ménagée à travers le fond 60A. Ladite ouverture de distribution de farine 60C débouche au droit et au-dessus de la sortie des buses 2. Ladite ouverture de distribution de farine 60C se présente avantageusement sous la forme d'une fente allongée, ménagée de préférence continûment sur toute la longueur du fond 60A, parallèlement au premier axe de rotation X-X'. Ladite ouverture de distribution de farine 60C est avantageusement ménagée au plus bas du fond 60A, dans la zone où convergent les parois courbes (ou inclinées) du fond 60A, pour amener la farine par gravité jusqu'à l'ouverture de distribution de farine 60C. Avantageusement, le dispositif de farinage 6 comprend également un arbre de distribution de farine 61 qui est disposé dans la trémie 60, au niveau dudit fond 60A et en regard de ladite ouverture de distribution de farine 60C. Ledit arbre de distribution de farine 61 est avantageusement mobile en rotation, selon un deuxième axe de rotation Z-Z' qui est avantageusement parallèle audit premier axe de rotation X-X', pour assurer un écoulement contrôlé de farine par ladite ouverture de distribution de farine 60C en direction desdits extrudats sortant des buses 2. Plus précisément, l'arbre de distribution de farine 61 tourne continûment selon le deuxième axe de rotation Z-Z' pour entraîner au niveau de sa surface de la farine, et l'amener jusqu'en regard de l'ouverture de distribution de farine 60C, d'où elle tombera par gravité en direction de la sortie des buses 2, pour recouvrir (par le dessus) lesdits extrudats issus des buses 2. À cette fin, l'arbre de distribution de farine 61 est avantageusement pourvu de cavités 61A (illustrées uniquement aux figures 6 et 11) distribuées de manière équi-angulaire autour du deuxième axe de rotation Z-Z', sur sensiblement toute la longueur de l'arbre de distribution 61.

Lesdites cavités 61A sont par exemple formées par des cannelures, auquel cas l'arbre de distribution de farine 61 est un arbre cannelé. Ainsi, lorsque l'arbre de distribution de farine 61 tourne, il embarque dans ses cavités 61A de la farine, qui est ensuite amenée par rotation de l'arbre de distribution de farine 61 jusqu'à l'ouverture de distribution de farine 60C, au niveau de laquelle la farine contenue dans les cavités 61A est relâchée par gravité, pour tomber sur la sortie des buses d'extrusion 2, et fariner ainsi les extrudats au moins en leur partie supérieure. Avantageusement, l'arbre de distribution de farine 61 tourne selon le deuxième axe Z-Z' à une vitesse sensiblement constante, et qui est de préférence suffisamment élevée pour faire s'échapper un flux de farine sensiblement continu par ladite ouverture de distribution de farine 60C, sur toute la longueur de cette dernière. Ledit flux de farine 62 forme ainsi avantageusement un rideau de farine, qui s'étend sensiblement verticalement, sur toute la longueur de l'ouverture de distribution de farine 60C, de façon sensiblement permanente. Un tel farinage continu s'avère particulièrement efficace pour garantir une découpe nette et sûre, au contraire des farinages intermittents mis en oeuvre dans l'art antérieur, généralement au moyen de clapets. Le recours à l'arbre de distribution de farine 61 mobile en rotation permet en outre d'assurer des cadences de fabrication élevées, en adaptant aisément le flux de farine s'échappant par l'ouverture de distribution de farine 60C à la vitesse de découpe, qui dépend de la vitesse de rotation du rouleau de découpe 4. Il est toutefois parfaitement envisageable, selon un mode de réalisation alternatif, de recourir à un dispositif de farinage 6 qui présente un caractère cyclique, intermittent, c'est-à-dire un dispositif de farinage qui relâche à intervalle de temps régulier une quantité prédéterminée de farine.

Le dispositif de formage 1 est avantageusement pourvu d'un système de récupération et de recyclage de farine, qui permet de collecter la farine surabondante qui n'a pas recouvert les extrudats, pour la ramener dans la trémie 60, par tous moyens appropriés (vis sans fin, dispositif d'aspiration, *etc*.).

Avantageusement, le dispositif de farinage 6 comprend en outre un dévoûteur 63, qui est disposé à l'intérieur de la trémie 60, au-dessus de l'arbre de distribution de farine 61. Le dévoûteur 63 est conçu pour prévenir et/ou briser d'éventuels agglomérats de farine qui pourraient se former, par exemple sous la forme d'une voûte, à l'intérieur de la trémie 60 et ainsi gêner ou bloquer l'écoulement continu de farine par l'ouverture de distribution de farine 60C. Comme illustré aux figures, le dévoûteur 63 inclut avantageusement un arbre rotatif pourvu d'excroissances, disposé à l'intérieur de la trémie 60, parallèlement audit, et au-dessus dudit, arbre de distribution de farine 61. Ledit arbre rotatif qui fait partie du dévoûteur 63 est avantageusement monté à rotation selon un troisième axe de rotation W-W' qui s'étend de préférence parallèlement audit premier axe de rotation X-X', et en l'espèce audit deuxième axe de rotation Z-Z'. La rotation de l'arbre rotatif du dévoûteur 63 est avantageusement synchronisée avec celle de l'arbre de distribution de farine 61, pour limiter le risque d'apparition d'agglomérats de farine perturbateurs au sein de la trémie 60. De préférence, les parois latérales de la trémie 60 sont pourvues de trappes d'inspection 600, 601, qui permettent d'accéder aisément, par exemple à des fins de maintenance ou de nettoyage, à l'arbre de distribution de farine 61 et/ou au dévoûteur 63, ainsi qu'éventuellement à d'autres équipements (comme par exemple une sonde de niveau reliée au système de récupération et de recyclage de farine).

Avantageusement, le dispositif de formage 1 comprend également un rouleau de striage 8 monté à rotation selon un quatrième axe de rotation V-V' parallèle audit premier axe de rotation X-X'. Ledit rouleau de striage 8 tourne avantageusement selon un deuxième sens S2 qui est de préférence identique au premier sens S1 de rotation du rouleau de découpe 4, ce qui simplifie le trajet des pâtons P2. Le rouleau de striage 8 est conçu pour strier les pâtons P2, c'est-à-dire les marquer en surface par des sillons parallèles. Le striage des pâtons P2 permet d'obtenir des pâtes alimentaires qui retiennent mieux la sauce, et dont la cuisson est optimisée, grâce aux stries dont ils sont recouverts. Afin d'impartir les stries aux pâtons P2 au moyen du rouleau de striage 8, le dispositif de formage 1 comprend avantageusement une surface d'appui 9 qui est disposée en regard dudit rouleau de striage 8 et délimite avec ce dernier un espace interstitiel de passage 80 des pâtons P2 entre le rouleau de striage 8 et la surface d'appui 9. Le rouleau de striage 8 est avantageusement pourvu de motifs superficiels en creux et/ou en relief pour strier les pâtons P2 lors de leur passage dans l'espace interstitiel 80. Il est également envisageable de recourir à une surface d'appui 9 pourvu de motifs superficiels en creux et/ou en relief pour strier les pâtons P2, auquel cas le rouleau de striage 8 peut éventuellement être dépourvu de tels motifs. Avantageusement, ledit espace interstitiel 80 se trouve sur la trajectoire d'éjection T0 des pâtons P2 impartie par les couteaux 5, ou dans le prolongement de cette dernière, de sorte que les pâtons P2 sont avantageusement directement propulsés, sensiblement en ligne droite ou quasi-droite, vers et dans l'espace interstitiel 80, pour y être striés au moyen du rouleau de striage 8. Des éléments de guidage complémentaires sont éventuellement prévus pour canaliser les pâtons P2 en direction de l'espace interstitiel 80. Ces moyens de guidage comprennent par exemple une plaque de guidage 10, disposée sensiblement vers le sommet du rouleau de striage 8, en regard de la surface d'appui 9 elle-même formée de préférence par une plaque métallique. De même, il est avantageusement prévu une bavette de guidage 11 portée par la filière d'extrusion 3, dans le prolongement de cette dernière comme illustré aux figures. Avantageusement, et comme illustré aux figures, le quatrième axe de rotation V-V' s'inscrit dans un plan horizontal H3 qui est situé en dessous du plan horizontal H1 dans lequel s'inscrit le premier axe de rotation X-X', lesdits premier et quatrième axes de rotation X-X', V-V' étant avantageusement sensiblement alignés verticalement, comme illustré à la figure 5. Ainsi le rouleau de striage 8 s'étend sensiblement en dessous du rouleau de découpe 4, lequel est lui-même en dessous du dispositif de farinage 6. Une telle configuration est particulièrement pratique, notamment pour assurer le nettoyage et la maintenance du dispositif de formage 1.

L'invention concerne également en tant que tel un procédé de fabrication de pâtes alimentaires destinées à être réchauffées et/ou cuites avant d'être consommées.

Ledit procédé selon l'invention est donc un procédé de pastification, pour fabriquer des pâtes alimentaires destinées à être réchauffées et/ou cuites avant d'être consommées. Le procédé en question peut être mis en oeuvre, conformément à un mode de réalisation préférentiel, au moyen de l'installation de fabrication avec son dispositif de formage 1 décrit ci-avant. Dès lors, l'ensemble de la description qui précède concernant le dispositif de formage 1 s'applique au procédé selon l'invention, et réciproquement la description qui suit relative au procédé selon l'invention s'applique au dispositif de formage 1 précité. Il est ceci étant parfaitement envisageable que le procédé de fabrication selon l'invention soit mis en oeuvre au moyen d'un dispositif de formage qui diffère de celui décrit ci-avant. Dans ce qui suit, par souci de concision, le procédé décrit correspond à celui mis en oeuvre par le dispositif de formage 1 selon l'invention.

Le procédé en question comprend préférentiellement une étape de réception, dans une cuve 12, de la composition pâteuse P à partir de laquelle les pâtes alimentaires sont destinées à être formées. Ladite composition pâteuse P est avantageusement conforme à la description qui précède.

Le procédé selon l'invention comprend une opération d'extrusion, au cours de laquelle la composition pâteuse P passe par des buses d'extrusion 2 pour former, en sortie desdites buses 2, des extrudats à partir desquels les pâtes alimentaires sont destinées à être formées.

Le procédé comprend avantageusement, de préférence avant l'opération d'extrusion, une étape de laminage de ladite composition pâteuse P pour la forcer à travers lesdites buses d'extrusion 2. Ladite étape de laminage est effectuée au moyen par exemple de rouleaux motorisés de laminage 13, 14, 15 disposés à l'intérieur de la cuve 12 précitée, pour forcer la composition pâteuse P contenue dans la cuve 12 à travers les buses d'extrusion 2, ces dernières communiquant avantageusement avec l'intérieur de ladite cuve 12.

Le procédé selon l'invention comprend également une opération de découpe desdits extrudats, de préférence en sortie desdites buses d'extrusion 2, au moyen d'un rouleau de découpe 4 (par exemple conforme à la description ci-avant) qui tourne relativement auxdites buses d'extrusion 2 selon un premier axe de rotation X-X', afin de former des pâtons P2, dont les taille et forme sont avantageusement prédéterminées, et qui se présentent par exemple par exemple sous forme de boulettes, boudins et/ou palets. Ladite opération de découpe consiste avantageusement à procéder à une découpe cyclique des extrudats sortant en continu des buses d'extrusion 2 pour obtenir des portions élémentaires formant lesdits pâtons P2.

Ledit rouleau de découpe 4 qui assure ladite opération de découpe comprend, comme exposé précédemment, une pluralité de couteaux 5 qui sont avantageusement individuels, distincts et distants les uns des autres, et sont préférentiellement répartis selon une distribution hélicoïdale le long dudit premier axe de rotation X-X', conformément à la description qui précède.

Conformément à l'invention, lesdits couteaux 5 exercent un effort d'entraînement du haut vers le bas sur chacun desdits pâtons P2 lors de la découpe des extrudats par lesdits couteaux 5 pour former lesdits pâtons P2, impartissant ainsi à chaque pâton P2 une trajectoire d'éjection T0 exclusivement descendante, c'est-à-dire sensiblement dépourvue de toute composante ascendante.

Le procédé de fabrication comprend en outre une opération de farinage, à des fins de lubrification et d'anti-adhérence des pâtons P2. Au cours de ladite opération farinage, lesdits extrudats issus des buses 2 sont farinés par le dessus, c'est-à-dire saupoudrés de farine par le dessus, sensiblement dès leur sortie des buses 2, avant leur découpe par lesdits couteaux 5. Ceci permet de garantir une découpe propre et nette, et évite tout risque de voir les pâtons P2 coller entre eux et/ou coller aux couteaux 5 ou à d'autres éléments du matériel mis en oeuvre.

Avantageusement, le procédé de fabrication selon l'invention comprend une étape préalable de fabrication de ladite composition pâteuse P par malaxage et cuisson d'un mélange formé à partir d'au moins une farine et/ou d'une semoule d'au moins une céréale contenant des protéines capables de former du gluten d'une part et d'un liquide d'hydratation d'autre part. Avantageusement, ledit mélange inclut en outre des ingrédients supplémentaires, comme par exemple des flocons de tubercule de *Solanum tuberosum* déshydraté, et/ou des additifs ou adjuvants divers (oeufs, etc.), comme déjà exposé dans ce qui précède en relation avec le dispositif de formage 1.

## Revendications

1. Dispositif de formage (1) de pâtes alimentaires destinées à être réchauffées et/ou cuites avant d'être consommées, ledit dispositif de formage (1) comprenant :
- des buses d'extrusion (2) par lesquelles est destinée à passer une composition pâteuse (P), pour former, en sortie desdites buses (2), des extrudats à partir desquels les pâtes alimentaires sont destinées à être formées,
- un rouleau de découpe (4) pour découper lesdits extrudats afin de former des pâtons (P2), ledit rouleau de découpe (4) étant monté mobile à rotation relativement auxdites buses d'extrusion (2) selon un premier axe de rotation (X-X'),
- et un dispositif de farinage (6),
**caractérisé en ce que** ledit rouleau de découpe (4) comprend une pluralité de couteaux individuels (5) conçus pour exercer un effort d'entraînement du haut vers le bas sur chacun desdits pâtons (P2) lors de la découpe des extrudats par lesdits couteaux (5) pour former lesdits pâtons (P2), afin d'impartir à chaque pâton (P2) une trajectoire d'éjection (T0) exclusivement descendante, ledit dispositif de farinage (6) étant disposé au-dessus de la sortie des buses (2) pour fariner lesdits extrudats sensiblement dès leur sortie des buses (2), avant leur découpe par lesdits couteaux (5).

2. Dispositif de formage (1) selon l'une quelconque des revendications précédentes **caractérisé en ce que** lesdits couteaux (5) comprennent des arêtes de coupe (5A) respectives qui parcourent des trajectoires de découpe (T1) circulaires respectives sous l'effet de la rotation dudit rouleau de découpe (4), lesdites trajectoires de découpe (T1) affleurant lesdites buses (2) pour découper lesdits extrudats sensiblement dès la sortie des buses (2).

3. Dispositif de formage (1) selon la revendication précédente **caractérisé en ce que** chacune desdites arêtes de coupe (5A) s'étend sensiblement parallèlement audit premier axe de rotation (X-X').

4. Dispositif de formage (1) selon l'une quelconque des revendications 2 et 3 **caractérisé en ce que** lesdites buses (2) présentent un profil de sortie qui est courbe et suit localement le profil desdites trajectoires de découpe (T1).

5. Dispositif de formage (1) selon l'une quelconque des revendications 2 à 4 **caractérisé en ce que** chaque couteau (5) comprend un bloc de coupe de forme sensiblement polyédrique qui présente une première et une deuxième face (50, 51) inclinées l'une par rapport à l'autre et dont l'intersection forme ladite arête de coupe (5A), ladite première face (50) étant située à l'avant de ladite deuxième face (51) par rapport au sens de rotation (S1) du rouleau de découpe (4), ladite première face (50) formant, avec un plan (F) qui est tangent à ladite trajectoire d'éjection (T0) et qui passe par ladite arête de coupe (5A), un angle d'éjection (α) compris entre 60° et 110°, de préférence entre 70° et 100°, de façon encore plus préférentielle entre 75° et 85°.

6. Dispositif de formage (1) selon la revendication précédente **caractérisé en ce que** ladite deuxième face (51) est située à l'arrière de ladite première face (50) par rapport au sens de rotation (S1) du rouleau de découpe (4), ladite deuxième face (51) formant, avec un plan (F) qui est tangent à ladite trajectoire d'éjection (T0) et qui passe par ladite arête de coupe (5A), un angle de découpe (β) compris entre 20° et 70°, de préférence entre 30° et 60°, de façon encore plus préférentielle entre 40° et 50°.

7. Dispositif de formage (1) selon l'une quelconque des revendications 2 à 6 **caractérisé en ce que** lesdites buses d'extrusion (2) sont disposées en rang les unes à côté et à distance des autres, chaque buse d'extrusion (2) étant positionnée au droit d'une seule desdites trajectoires de découpe (T1) circulaires pour que chaque couteau (5) assure la découpe cyclique d'un seul desdits extrudats issu d'une seule desdites buses d'extrusion (2).

8. Dispositif de formage (1) selon l'une quelconque des revendications précédentes **caractérisé en ce que** chacune desdites buses (2) définit une direction d'extrusion respective (Y-Y'), ledit premier axe de rotation (X-X') s'inscrivant dans un premier plan (H1), tandis que chaque direction d'extrusion (Y-Y') s'inscrit dans un deuxième plan (V) perpendiculaire audit premier plan (H1), lesdites buses (2) étant agencées relativement audit rouleau de découpe (4) pour que leurs directions d'extrusion respectives (Y-Y') ne croisent pas ledit premier axe de rotation (X-X').

9. Dispositif de formage (1) selon l'une quelconque des revendications précédentes **caractérisé en ce que** lesdits couteaux (5) sont répartis selon une distribution hélicoïdale le long dudit premier axe de rotation (X-X'), lesdits couteaux (5) étant répartis en une pluralité de groupes de n couteaux (5), avec n ≥ 2, chacun desdits groupes présentant une symétrie de rotation discrète d'ordre n selon ledit premier axe de rotation (X-X'), lesdits groupes étant répartis à intervalle régulier en rang les uns derrière les autres le long dudit premier axe de rotation (X-X'), avec un décalage angulaire entre deux groupes adjacents pour réaliser ainsi ladite distribution hélicoïdale le long dudit premier axe de rotation (X-X').

10. Dispositif de formage (1) selon la revendication précédente **caractérisé en ce que** chaque groupe de couteaux (5) s'étend, selon une direction d'extension longitudinale parallèle audit premier axe de rotation (X-X'), entre des plans gauche (G) et droit (D) perpendiculaires audit premier axe (X-X') de rotation, le plan gauche (G) de chaque groupe étant distant du plan droit (D) d'un autre groupe qui lui est adjacent au sein dudit rang de groupes, pour ménager un espace intergroupe (E) libre selon la direction d'extension longitudinale.

11. Dispositif de formage (1) selon l'une quelconque des revendications précédentes **caractérisé en ce que** ledit dispositif de farinage (6) comprend une trémie (60) destinée à contenir de la farine, ladite trémie (60) étant pourvue d'un fond (60A) à travers lequel est ménagée une ouverture de distribution de farine (60C) débouchant au droit et au-dessus de la sortie des buses (2), ledit dispositif de farinage (6) comprenant également un arbre de distribution de farine (61) qui est disposé dans la trémie (60), au niveau dudit fond (60A) et en regard de ladite ouverture de distribution de farine, ledit arbre de distribution de farine (60C) étant mobile en rotation pour assurer un écoulement contrôlé de farine (61) par ladite ouverture de distribution de farine (60C) en direction desdits extrudats sortant des buses (2).

12. Dispositif de formage (1) selon l'une quelconque des revendications précédentes **caractérisé en ce qu'**il comprend un rouleau de striage (8) monté à rotation selon un quatrième axe de rotation (V-V') parallèle audit premier axe de rotation (X-X'), ainsi qu'une surface d'appui (9) disposée en regard dudit rouleau de striage (8) et délimitant avec ce dernier un espace interstitiel de passage (80) des pâtons (P2) entre ledit rouleau de striage (8) et ladite surface d'appui (9), ledit espace interstitiel (80) se trouvant sur ladite trajectoire d'éjection (T0) ou dans le prolongement de cette dernière, ledit rouleau de striage (8) étant pourvu de motifs superficiels en creux et/ou en relief pour strier les pâtons (P2) lors de leur passage dans ledit espace interstitiel (80).

13. Installation de fabrication de pâtes alimentaires destinées à être réchauffées et/ou cuites avant d'être consommées, ladite installation incluant au moins :
- un poste de fabrication d'une composition pâteuse (P) à partir de laquelle lesdites pâtes alimentaires sont destinées à être fabriquées,
- un dispositif de formage (1) selon l'une quelconque des revendications précédentes.

14. Procédé de fabrication de pâtes alimentaires destinées à être réchauffées et/ou cuites avant d'être consommées, ledit procédé comprenant :
- une opération d'extrusion au cours de laquelle une composition pâteuse (P) passe par des buses d'extrusion (2) pour former, en sortie desdites buses (2), des extrudats à partir desquels les pâtes alimentaires sont destinées à être formées,
- une opération de découpe desdits extrudats, au moyen d'un rouleau de découpe (4) qui tourne relativement auxdites buses d'extrusion (2) selon un premier axe de rotation (X-X'), afin de former des pâtons (P2),
- une opération de farinage,
**caractérisé en ce que** ledit rouleau de découpe (4) comprend une pluralité de couteaux (5) qui exercent un effort d'entraînement du haut vers le bas sur chacun desdits pâtons (P2) lors de la découpe des extrudats par lesdits couteaux (5) pour former lesdits pâtons (P2), impartissant ainsi à chaque pâton (P2) une trajectoire d'éjection (T0) exclusivement descendante, et **en ce qu'**au cours de ladite opération de farinage, lesdits extrudats sont farinés par le dessus, sensiblement dès leur sortie des buses (2), avant leur découpe par lesdits couteaux (5).

15. Procédé de fabrication selon la revendication précédente **caractérisé en ce qu'**il comprend une étape préalable de fabrication de ladite composition pâteuse (P) par malaxage et cuisson d'un mélange formé à partir au moins d'une farine et / ou d'une semoule d'au moins une céréale contenant des protéines capables de former du gluten et d'un liquide d'hydratation.
